# EUROPÄISCHE PATENTSCHRIFT

(11) **EP 1 345 047 B1**
(45) Veröffentlichungstag und Bekanntmachung des Hinweises auf die Patenterteilung: **13.06.2012**
(21) Anmeldenummer: 03005156.9
(22) Anmeldetag: 07.03.2003
(51) Int. Cl.: G01V 8/10

(54) **Signalverarbeitungsverfahren und Auswerteschaltung**
Signal processing method and evaluation circuit
Méthode de traitement de signal et circuit d'évaluation

(30) Priorität: 14.03.2002 DE 10211343
(43) Veröffentlichungstag der Anmeldung: 17.09.2003
(73) Patentinhaber: SICK AG, 79183 Waldkirch (DE)
(72) Erfinder: Blöhbaum, Frank, 79112 Freiburg (DE)
(74) Vertreter: Manitz, Finsterwald & Partner GbR

(56) Entgegenhaltungen:
- US-A- 5 444 239
- US-A- 5 883 383
- US-A- 6 018 159
- PATENT ABSTRACTS OF JAPAN vol. 2002, no. 12, 12. Dezember 2002 (2002-12-12) -& JP 2002 237062 A (TOSHIBA CORP), 23. August 2002 (2002-08-23)

## Beschreibung

Die Erfindung betrifft ein Verfahren nach den Oberbegriffen der Ansprüche 1 und 13 sowie eine Vorrichtung nach den Oberbegriffen der Ansprüche 19 und 25.

In der Automatisierungs- und Sicherheitstechnik ist der Einsatz von Lichtgittern bekannt, bei denen eine Vielzahl von parallelen Lichtstrahlen periodisch ausgesandt wird, um beispielsweise eine ebene Fläche auf das Eindringen eines Gegenstands oder eines Körperteils überwachen zu können. Das jedem Lichtstrahl zugeordnete Empfangssignal wird letztlich innerhalb einer Komparatorstufe mit einem Schwellwert verglichen, um bei einem Unter- oder Überschreiten des Schwellwerts ein Gegenstandsfeststellungs- oder ein Abschaltsignal auszulösen. Die empfangsseitige Signalverarbeitungskette enthält typischerweise für jeden Empfangskanal eine Fotodiode als Lichtempfänger, einen Transimpedanzverstärker mit Bandpasseigenschaft, eine Differenzverstärkerstufe mit differentiellem Stromausgang sowie die genannte Komparatorstufe. Zusätzlich kann auch noch eine Regelschaltung zur Hintergrundlichtunterdrückung vorgesehen sein.

Im Hinblick auf die Vielzahl der Empfangskanäle ist eine möglichst kostengünstige Verwirklichung der Auswerteelektronik erwünscht. Es ist insbesondere erstrebenswert, die analoge Empfangssignalverarbeitung für jeden Empfangskanal zumindest teilweise in einem integrierten Schaltkreis zusammenzufassen, wobei diese Schaltkreise zu einem Analogbus parallelgeschaltet werden. Dabei kann - zur weiteren Verringerung des Herstellungsaufwands - für alle Empfangskanäle dieses Analogbusses eine einzige, gemeinsame Komparatorstufe vorgesehen sein. Über den genannten Analogbus werden der genannten Komparatorstufe dann alle Empfangssignale, d.h. alle Ausgangssignale der jeweiligen Differenzverstärkerstufen, zugeführt, so dass die Komparatorstufe für jeden einzelnen Empfangskanal überprüfen kann, ob eine Schwellwertüber- oder -unterschreitung stattgefunden hat.

Problematisch ist, dass die den einzelnen Empfangskanälen zugeordneten integrierten Schaltkreise aufgrund von Fertigungsstreuungen vergleichsweise große Toleranzen aufweisen, so dass am Ausgang der jeweiligen Differenzverstärkerstufen im Vergleich zueinander sehr hohe, fertigungsbedingte Schwankungen auftreten. Diese Schwankungen können dazu führen, dass bezogen auf bestimmte Empfangskanäle die Komparatorstufe ein Über- oder Unterschreiten des vorgegebenen Schwellwerts feststellt, ohne dass beim zugeordneten Empfangskanal ein Lichtempfang stattgefunden hat. Dies kann beispielsweise dazu führen, dass trotz Unterbrechung eines Lichtstrahls kein Abschaltsignal ausgelöst wird.

Diese Gefahr könnte zwar dadurch beseitigt werden, dass vor die Komparatorstufe ein Hochpass geschaltet wird. Allerdings erweist es sich als schwierig, eine Eckfrequenz für diesen Hochpass zu finden, die den Anforderungen des Gesamtsystems genügt. Eine zu niedrige Eckfrequenz kann nämlich dazu führen, dass bei einem Umschalten zwischen den verschiedenen Empfangskanälen die Variation des jeweiligen Offset ebenfalls bis zur Komparatorstufe durchgelassen wird und dort ein Schalten des Komparators bewirkt. Eine zu hohe Eckfrequenz des Hochpasses dagegen liegt zwangsläufig im Übertragungsbereich des Bandpasses des Empfangskanals bzw. des integrierten Schaltkreises. Auch dessen Bandpassgrenzen unterliegen zwangsläufig großen Schwankungen. Die Interaktion mit dem zwischengeschalteten Hochpass kann deshalb einen Bandpass höherer Ordnung mit nicht definierter Übertragungsfunktion ergeben, so dass die hieraus resultierenden Überschwinger im Zeitbereich wiederum ein unbeabsichtigtes Schalten der Komparatorstufe auslösen können.

US 5,444,239 betrifft einen Scanner, wie er beispielsweise in Fax- oder Kopiergeräten eingesetzt wird und welcher dazu geeignet ist, ein Dokument zeilenweise mit einem Laserstrahl zu scannen. Erläutert ist hier die exakte Detektion des jeweiligen Beginns der aufeinanderfolgenden Scanbewegungen mittels einer

Detektoranordnung. PAJ, vol. 2002, no. 12 (2002-12-12) -& JP 2002 237062 A (2002-08-23) betrifft eine Vorrichtung zur Erkennung von Fehlersignalen beim Lesen von Daten aus einem optischen Speicher.

US 5,883,383 beschreibt eine auf optischer Basis arbeitende Zählvorrichtung zum Zählen von Samenkörnern, die sich in einer Transportbewegung befinden.

DE 195 10 304 C1 offenbart ein Verfahren zur Verarbeitung eines Empfangssignals eines Lichtgitters mit einer Vielzahl von jeweils einen Lichtempfänger aufweisenden Empfangskanälen, bei dem ein Empfangssignal erzeugt wird, welches aus einer Folge von Signalen mehrerer Empfangskanäle gebildet ist.

Es ist eine Aufgabe der Erfindung bei kostengünstiger Herstellung die Detektionssicherheit noch weiter zu verbessern.

Die Aufgabe wird für ein Verfahren der eingangs genannten Art gemäß einer ersten, bevorzugt digital realisierten Ausführungsvariante durch die Merkmale des Anspruchs 1 gelöst.

Erfindungsgemäß wird also das Empfangssignal, welches dem Ausgangssignal der jeweiligen Differenzverstärkerstufe entspricht, nicht einfach mit einem Schwellwert verglichen, sondern vielmehr wird dieses Empfangssignal mit einem dem Empfangssignal entsprechenden, diesem gegenüber jedoch verzögerten Signal verglichen. Erst das sich aus diesem Vergleich ergebende Signal wird dann weiterverarbeitet.

Konkret wird bei der ersten erfindungsgemäßen Lösungsvariante die Differenz zwischen den beiden verschieden verzögerten Empfangssignalen bzw. zwischen einem unverzögerten und einem verzögerten Empfangssignal gebildet, woraufhin das so erhaltene Differenzsignal darauf hin untersucht wird, wann es einen vorgegebenen Schwellwert über- bzw. unterschreitet. Dadurch, dass letztlich also ein Differenzsignal untersucht wird, werden Offset-Schwankungen am Ausgang der Differenzverstärkerstufe automatisch eliminiert, da der jeweilige Offset in den beiden voneinander zu subtrahierenden Signalen in gleicher Weise vorhanden ist.

Durch die Erfindung wird es also möglich, beispielsweise Lichtgitteranordnungen mit mehreren hundert Empfangskanälen und entsprechend vielen empfängerseitigen integrierten Schaltkreisen zu realisieren, welche einen gemeinsamen Analogbus bedienen, ohne dass sich die bei einer Massenherstellung unvermeidbaren Fertigungstoleranzen negativ auf die Zuverlässigkeit des Lichtgitters auswirken.

Die erste erfindungsgemäße Lösungsvariante wird bevorzugt digital realisiert, wobei dann das Empfangssignal einem A/D-Wandler zugeführt und die vom A/D-Wandler gelieferten Ausgangssignalwerte in einem Speicher abgelegt werden. Im Speicher sollten dann zu jedem Zeitpunkt zumindest immer diejenigen Werte abgelegt sein, die vom A/D-Wandler innerhalb einer vorgebebenen Zeitspanne vor dem jeweils aktuellen Zeitpunkt geliefert wurden. Auf diese Weise wird sichergestellt, dass im Speicher aktuell auch immer diejenigen Werte vorhanden sind, die zur Bildung des verzögerten Empfangssignals benötigt werden. Dementsprechend ist es sinnvoll, wenn die genannte Zeitspanne zumindest der Verzögerungsdifferenz zwischen den beiden der erfindungsgemäßen Detektionsschaltung zugeführten Signalen entspricht. In der Praxis ist es von Vorteil, wenn die Verzögerungsdifferenz zwischen den beiden miteinander zu vergleichen Signalen ungefähr der Hälfte der Einzelpulsbreite des Empfangssignals entspricht.

Bei entsprechender Speicherbelegung können die beiden, erfindungsgemäß benötigten, miteinander zu vergleichenden Signale dadurch erzeugt werden, dass sie beide, insbesondere gleichzeitig, aus dem Speicher ausgelesen werden.

Das Auslesen des Speichers kann dann für beide Signale an unterschiedlichen Speicherpositionen erfolgen, welche jeweils unterschiedlichen Zeitpunkten des vom A/D-Wandler gelieferten Signals entsprechen. Die zeitliche Differenz zwischen beiden Zeitpunkten entspricht dann der Verzögerungsdifferenz zwischen den beiden der Detektionsschaltung zugeführten Signalen.

Wenn man die beiden, miteinander zu vergleichenden Signale durch ein Auslesen des Speichers gewinnt, kann die Subtraktion dieser beiden, dann digital vorliegenden Signale ebenfalls digital durchgeführt werden.

Das durch die Subtraktion erhaltene Differenzsignal kann einem Digitalkomparator zugeführt werden, welcher das Differenzsignal mit dem genannten, vorgegebenen Schwellwert vergleicht. Dieser Schwellwert ist bevorzugt ungleich Null, um so ein "Flattern" des Ausgangssignals des Digitalkomparators in denjenigen Zeitspannen zu vermeiden, in denen beim jeweiligen Empfangskanal kein Lichtempfang vorliegt.

Das Ausgangssignal des Digitalkomparators zeigt zuverlässig an, ob beim jeweils gerade untersuchten Empfangssignal ein Lichtempfang vorliegt oder nicht. Dementsprechend kann das Ausgangssignal des Digitalkomparators zur Weiterverarbeitung verwendet werden.

Gemäß einer zweiten erfindungsgemäßen Lösungsvariante, welche bevorzugt analog realisiert wird, wird die der Erfindung zugrundeliegende Aufgabe durch die Merkmale des Anspruchs 13 gelöst.

Der wesentliche Unterschied zur ersten Lösungsvariante besteht dementsprechend darin, dass die beiden miteinander zu vergleichenden Signale nicht nur unterschiedlich verzögert sind, sondern auch einen unterschiedlichen Gleichanteil aufweisen. Weiterhin besteht ein Unterschied darin, dass das durch den Vergleich erhaltene Signal nicht mehr mit einem insbesondere von Null verschiedenen Schwellwert verglichen werden muss, da gemäß der zweiten Lösungsvariante kein Differenzsignal erzeugt wird, sondern lediglich untersucht wird, wann das eine der beiden zu vergleichenden Signale größer als das andere ist. Die Zeitpunkte, zu denen diese Bedingung erfüllt ist, zeigen bereits zuverlässig an, ob beim jeweils gerade untersuchten Empfangskanal ein Lichtempfang vorliegt oder nicht.

Der Unterschied der beiden Verzögerungen beträgt auch bei der zweiten Lösungsvariante wiederum bevorzugt ungefähr die Hälfte der Einzelpulsbreite des Empfangssignals.

Das Empfangssignal kann bei der zweiten Lösungsvariante in den beiden Eingangszweigen der Komparatorschaltung in im wesentlichen gleichem Maße verstärkt werden. Eine solche Verstärkung ist jedoch nicht zwingend erforderlich.

Ebenso wie bei der ersten Lösungsvariante kann bei der zweiten Lösungsvariante das Ausgangssignal der Komparatorschaltung zur Weiterverarbeitung verwendet werden.

Bei beiden Lösungsvarianten weisen die Einzelpulse des Empfangssignals im wesentlichen die Form eines bipolaren Pulses auf.

Weiterhin wird ebenfalls bei beiden Lösungsvarianten als Empfangssignal bevorzugt das Ausgangssignal eines Differenzverstärkers verwendet, an den ein differentielles, vom jeweiligen optoelektronischen Sensor erzeugtes Signal angelegt ist.

Weitere bevorzugte Ausführungsformen der erfindungsgemäßen Verfahren sind in den Unteransprüchen beschrieben.

Die erste Lösungsvariante des erfindungsgemäßen Verfahrens lässt sich beispielsweise mittels einer Auswerteschaltung zur Verarbeitung eines Empfangssignals eines optoelektronischen Sensors, insbesondere eines Lichtgitters durchführen, wie sie in Anspruch 25 beschrieben ist.

Die zweite Lösungsvariante des erfindungsgemäßen Verfahrens lässt sich beispielsweise mit einer Auswerteschaltung zur Verarbeitung eines Empfangssignals eines Lichtgitters durchführen, wie sie in Anspruch 19 beschrieben ist.

Bevorzugt sind in diesem Fall Verzögerungsschaltung und Offsetschaltung im gleichen Signalzweig vorgesehen.

Die Verzögerungsschaltung und die Offsetschaltung können durch einen mit einem Tiefpass in Serie geschalteten Allpass realisiert werden, wobei der Allpass insbesondere als Allpass zweiter Ordnung mit integriertem Invertierer ausgebildet ist. Auch der Tiefpass kann in diesem Fall einen integrierten Invertierer aufweisen. Bevorzugt ist der Tiefpass dem Allpass nachgeschaltet.

Weitere bevorzugte Ausführungsformen der erfindungsgemäßen Auswerteschaltungen sind in den Unteransprüchen genannt.

Die Erfindung wird nachfolgend anhand von Ausführungsbeispielen unter Bezugnahme auf die Zeichnungen beschrieben; in diesen zeigen:
- Fig. 1a: ein Beispiel für einen möglichen Verlauf eines Emp- fangssignals,
- Fig. 1b: den Verlauf eines aus dem Empfangssignal gemäß Fig. 1a abgeleiteten Ausgangssignals einer Komparatorstufe gemäß Stand der Technik,
- Fig. 2a: einen Verlauf gemäß Fig. 1 mit dem Unterschied, dass das Empfangssignal zuvor einen Hochpass durchlaufen hat,
- Fig. 2b: den Verlauf des aus einem Signal gemäß Fig. 2a abgelei- teten Ausgangssignals einer Komparatorstufe gemäß Stand der Technik,
- Fig. 3a: ein Beispiel für einen möglichen Verlauf zweier erfin- dungsgemäß miteinander zu vergleichender, aus einem Empfangssignal abgeleiteter Signale,
- Fig. 3b: das Ausgangssignal eines erfindungsgemäß vorgesehe- nen Komparators bei Zugrundelegung eines Signalver- laufs gemäß Fig. 3a,
- Fig. 4a, b: Fig. 3a und 3b entsprechende Signalverläufe in vergrö- ßertern Maßstab, wobei hier das verzögerte Signal ge- genüber dem unverzögerten Signal nicht gedämpft ist,
- Fig. 5a, b: Fig. 4a, b entsprechende Signalverläufe, wobei die bei- den miteinander zu vergleichenden Signale gemäß Fig. 5a im Vergleich zu Fig. 4a invertiert sind,
- Fig. 6: ein Blockschaltbild einer ersten Ausführungsform einer analogen Auswerteschaltung zur Realisierung der zwei- ten erfindungsgemäßen Lösungsvariante,
- Fig. 7: ein Blockschaltbild einer zweiten Ausführungsform einer analogen Auswerteschaltung zur Realisierung der zweiten erfindungsgemäßen Lösungsvariante,
- Fig. 8: ein Blockschaltbild einer digitalen Auswerteschaltung zur Realisierung der ersten erfindungsgemäßen Lö- sungsvariante,
- Fig. 9a: einen möglichen Verlauf zweier miteinander zu verglei- chender, aus einem Speicher gemäß Fig. 8 ausgelesener Signale,
- Fig. 9b: das sich bei einem Signalverlauf gemäß Fig. 9a ergeben- de Ausgangssignal einer Subtraktionsstufe gemäß Fig. 8, und
- Fig. 9c: das sich bei einem Verlauf gemäß Fig. 9b ergebende Ausgangssignal eines Digitalkomparators gemäß Fig. 8.

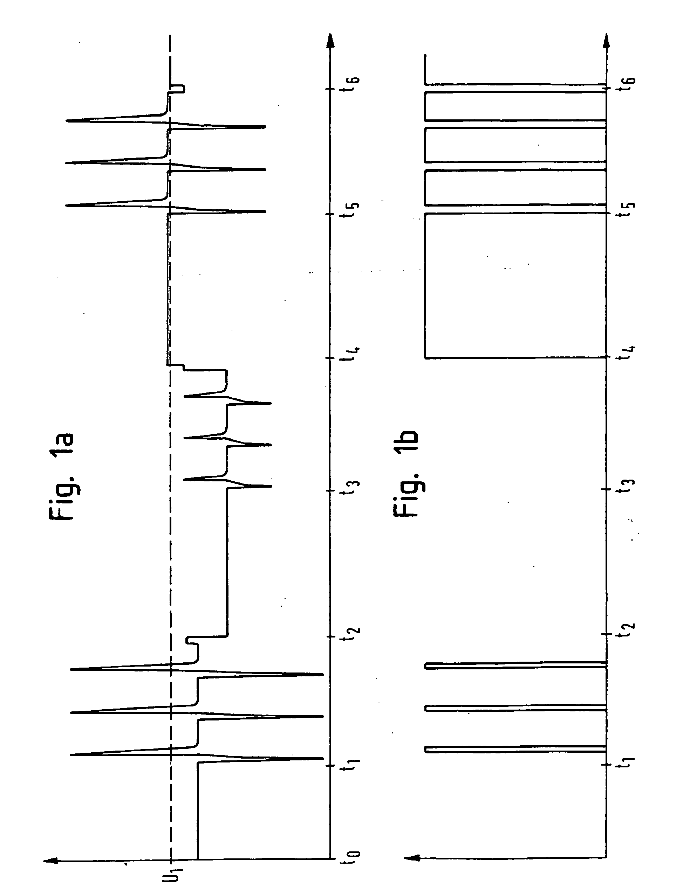

Fig. 1a zeigt den typischen Verlauf eines auf einem gemeinsamen Analogbus liegenden Empfangssignals, welches mehreren, voneinander verschiedenen Empfangskanälen zugeordnet ist. Der Signalausschnitt gemäß Fig. 1a zeigt einen Bereich, in dem von drei unterschiedlichen Empfangskanälen Signale geliefert werden, wobei jeder Empfangskanal jeweils drei, jeweils im wesentlichen die Form eines bipolaren Pulses besitzende Einzelpulse liefert. Dem ersten Empfangskanal ist das Zeitintervall von t₀ bis t₂, dem zweiten Empfangskanal das Zeitintervall von t₂ bis t₄ und dem dritten Empfangskanal des Zeitintervall von t₄ bis t₆ zugeordnet.

Aufgrund der eingangs erwähnten Fertigungstoleranzen der den einzelnen Empfangskanälen zugeordneten integrierten Schaltkreise ergeben sich für die Einzelpulse der verschiedenen Empfangskanäle verschieden starke Amplituden und auch verschieden große Gleichanteile, was bei Betrachtung der Fig. 1a deutlich wird. Der Gleichanteil im Zeitintervall t₂ bis t₄ ist beispielsweise geringer als in den beiden anderen Zeitintervallen, wohingegen die Amplituden der Einzelpulse im Zeitintervall t₀ bis t₂ am größten und im Zeitintervall t₂ bis t₄ am kleinsten sind.

Gemäß Stand der Technik wird überprüft, ob das Empfangssignal in Fig. 1a einen vorbestimmten Schwellwert überschreitet, welcher in Fig. 1a mit U₁ gekennzeichnet ist.

Das Signal gemäß Fig. 1b zeigt ein diskretes Signal, welches immer dann "1" ist, wenn das Empfangssignal in Fig. 1a den Schwellwert U₁ überschritten hat. Fig. 1b kann entnommen werden, dass die drei Einzelpulse des Zeitintervalls t₀ bis t₂ korrekt erkannt werden, wohingegen beispielsweise die drei Einzelpulse des Zeitintervalls t₂ bis t₄ überhaupt nicht erkannt werden, da der niedrige Gleichanteil in diesem Zeitintervall bewirkt, dass die Schwelle U₁ überhaupt nicht überschritten wird. Beim Zeitintervall t₄ bis t₆ ist der Gleichanteil dann wiederum so hoch, dass auch bei Nichtvorliegen eines Einzelpulses die Schwelle U₁ überschritten wird, was dann zu einem fehlerhaften Signal "1" im Zeitintervall zwischen t₄ und t₅ führt.

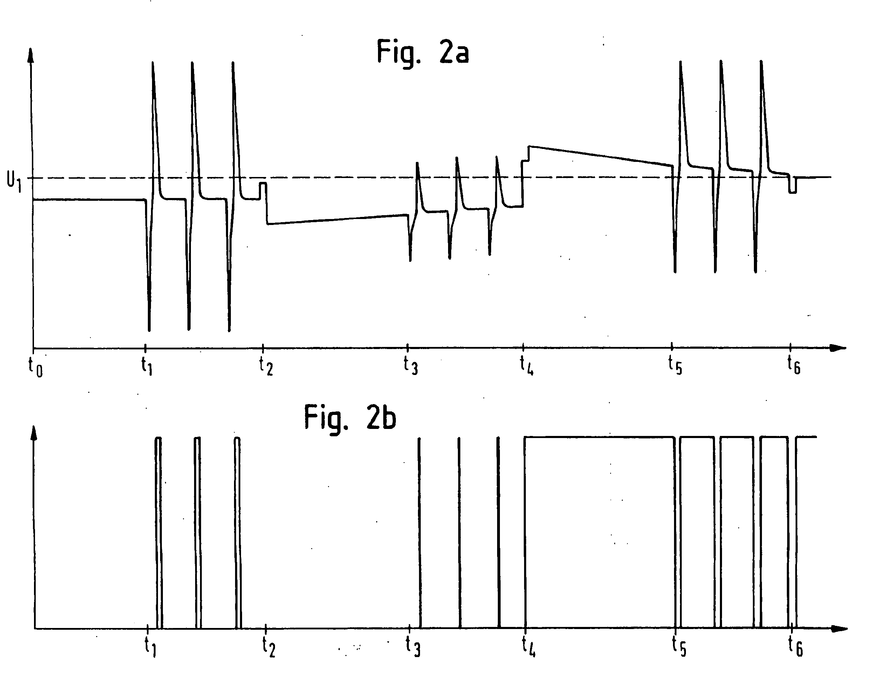

Um die in Verbindung mit den Fig. 1a, b beschriebenen Nachteile des schwankenden Gleichanteils zu vermeiden, kann anstelle des Signals gemäß Fig. 1a ein Empfangssignal untersucht werden, welches zuvor einen Hochpass durchlaufen hat. Ein solches Empfangssignal ist in Fig. 2a dargestellt, wobei das Signal gemäß Fig. 2a dadurch entstanden ist, dass das Signal gemäß Fig. 1a an einen Hochpass angelegt wurde. Die für eine verzerrungsfreie Übertragung nötige große Zeitkonstante des Hochpasses führt dazu, dass das Signal beim Umschalten von einem Empfangskanal auf den nächsten Empfangskanal auf den neuen Offsetwert springt und dann mit der Zeitkonstante des Hochpasses abklingt.

Fig. 2b zeigt wiederum ein diskretes Signal, welches immer dann "1" ist, wenn das Signal gemäß Fig. 2a den Schwellwert U₁ überschreitet. Dem Signalverlauf gemäß Fig. 2b kann man entnehmen, dass durch das Vorsehen des Hochpasses zwar gegenüber Fig. 1b eine Verbesserung erzielt werden kann, jedoch immer noch Fehler auftreten:

Die drei Einzelpulse im Zeitintervall t₀ bis t₂ werden gemäß Fig. 2b wiederum korrekt erkannt. Im Unterschied zu Fig. 1b werden jedoch nun auch die drei Einzelpulse des Zeitintervalls t₂ bis t₄ korrekt erkannt, da der Offset im Zeitintervall t₂ bis t₃ bereits so weit abgeklungen ist, dass die drei Einzelpulse im Zeitintervall t₃ bis t₄ den Schwellwert U₁ überschreiten.

Das in Verbindung mit Fig. 1b geschilderte Problem im Zeitintervall t₄ bis t₆ bleibt jedoch auch gemäß Fig. 2b unverändert bestehen, da der Offset zu Beginn des Zeitintervalls t₄ bis t₆ wiederum oberhalb des Schwellwerts U₁ liegt.

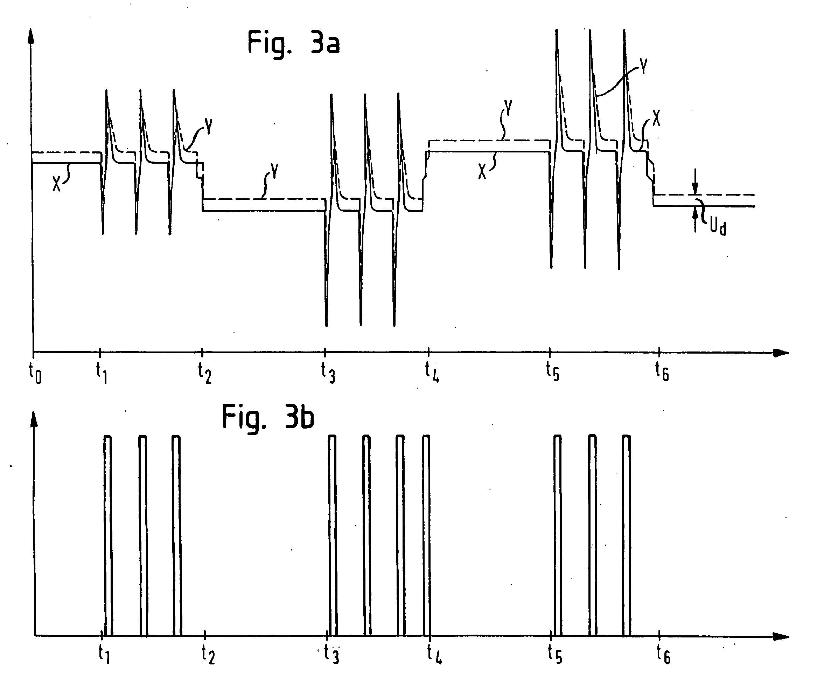

Die Fig. 3a bis 5b verdeutlichen nun, welche Signalverläufe einem erfindungsgemäßen Verfahren zugrunde liegen können:

Fig. 3a zeigt entsprechend Fig. 1a mit durchgezogener Linie den Verlauf eines auf einem Analogbus liegenden Empfangssignals X, wobei hier wiederum ein zeitlicher Ausschnitt gezeigt ist, in welchem von drei unterschiedlichen Empfangskanälen Signale geliefert werden. Die Einzelpulse der verschiedenen Empfangskanäle weisen wiederum voneinander verschiedene Amplituden und Gleichanteile auf.

Mit gestrichelter Linie ist ein Signal Y gezeigt, welches gegenüber dem Signal X um einen Gleichanteil U_{d} angehoben ist und welches gegenüber dem Signal X zeitlich verzögert ist. Die Verzögerung beträgt im Beispiel gemäß Fig. 3a lediglich einen Bruchteil der Dauer eines Einzelpulses.

Fig. 3b zeigt ein aus den Signalen X und Y abgeleitetes diskretes Signal, welches immer dann den Wert "1" aufweist, wenn das Signal X größer ist als das Signal Y. Da diese Bedingung bei jedem Einzelpuls des Signals 3a immer genau einmal auftritt, und zwar unabhängig von den Amplituden und den Gleichanteilen der Einzelpulse, können die Einzelpulse des Signals 3a durch das Signal gemäß Fig. 3b zuverlässig erkannt werden. Die Tatsache, dass die Gleichanteilsänderung zwischen dem Intervall t₃ bis t₄ und dem Intervall t₄ bis t₅ ebenfalls zu einem Signal "1" gemäß Fig. 3b führt, wirkt sich nicht störend aus, da durch die Synchronisation der Gesamtschaltungsanordnung bekannt ist, in welchen Zeiträumen Einzelpulse auftreten können, so dass Signalverläufe zwischen diesen Zeiträumen von der Auswertung ausgenommen werden können.

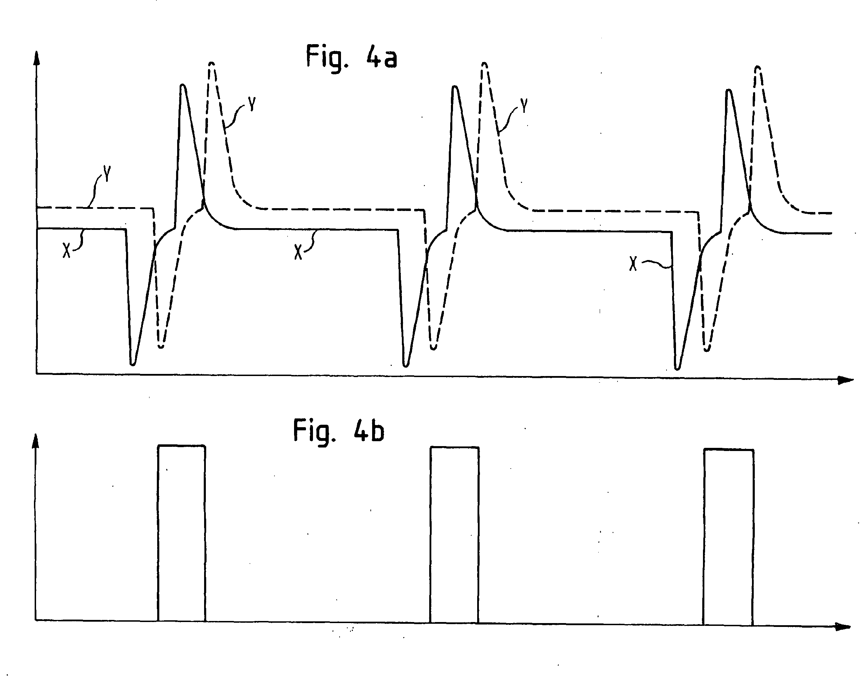

Fig. 4a und 4b zeigen Signalverläufe entsprechend den Fig. 3a und 3b mit derart vergrößerter zeitlicher Auflösung, dass nur drei Einzelpulse eines Empfangskanals zu sehen sind. Im Unterschied zu Fig. 3a ist gemäß Fig. 4a das Signal Y gegenüber dem Signal X jedoch nicht gedämpft. Die Fig. 4a und 4b zeigen sehr anschaulich, dass das diskrete Signal gemäß Fig. 4b immer dann den Wert "1" annimmt, wenn das Signal X größer ist als das Signal Y. Bei jedem Einzelpuls gibt es jeweils einen Zeitabschnitt, bei dem diese Bedingung erfüllt ist, so dass gemäß Fig. 4b insgesamt drei Impulse entstehen. Die steigende Flanke dieser Impulse ist gegenüber dem Beginn jedes Einzelpulses des Signals X zeitverzögert, da die Bedingung "X > Y" nicht gleich zu Beginn eines Einzelpulses X vorliegt.

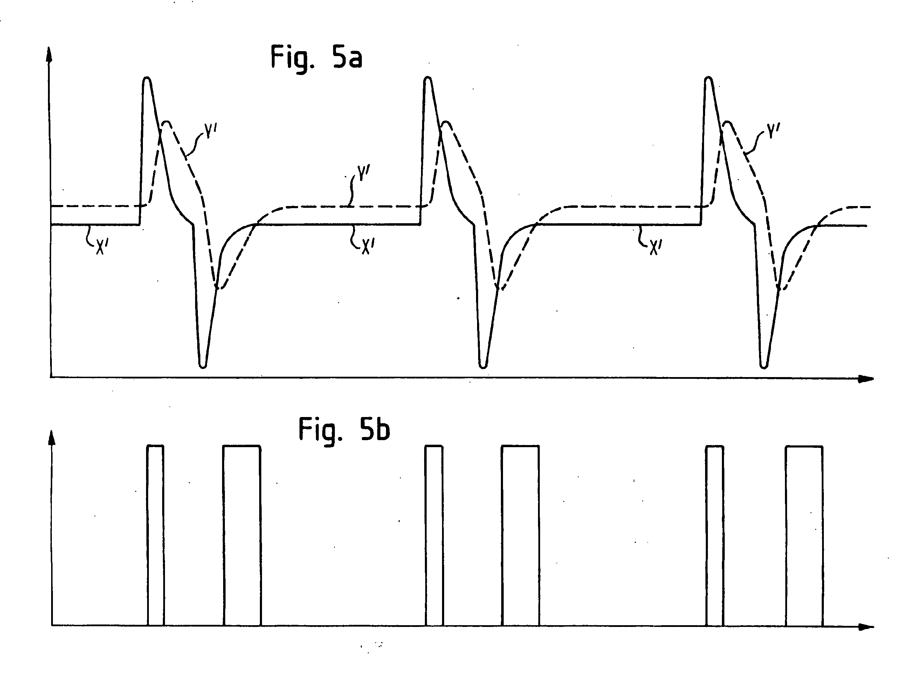

Diese Zeitverzögerung kann gemäß den Fig. 5a und 5b eliminiert werden, indem invertierte Signale X' und Y' untersucht werden. Fig. 5a zeigt, dass die Bedingung X' > Y' praktisch unmittelbar zu Beginn eines Einzelpulses X' vorliegt. Ebenso liegt diese Bedingung am Ende eines jeden Einzelpulses X' vor, im mittleren Bereich jedes Einzelpulses X' ist die Bedingung jedoch nicht gegeben. Dementsprechend ergeben sich beim diskreten Signal gemäß Fig. 5b, welches wiederum anzeigt, wann X' größer als Y' ist, pro Einzelpuls zwei Impulse, wobei die steigende Flanke des ersten Impulses praktisch zeitgleich mit der steigenden Flanke des Einzelpulses X' liegt.

Folglich kann mit dem Verfahren gemäß den Fig. 5a, b zuverlässig und praktisch verzögerungsfrei erkannt werden, ob ein Einzelpuls vorliegt oder nicht, und zwar unabhängig von der Amplitude und dem Gleichanteil des Einzelpulses.

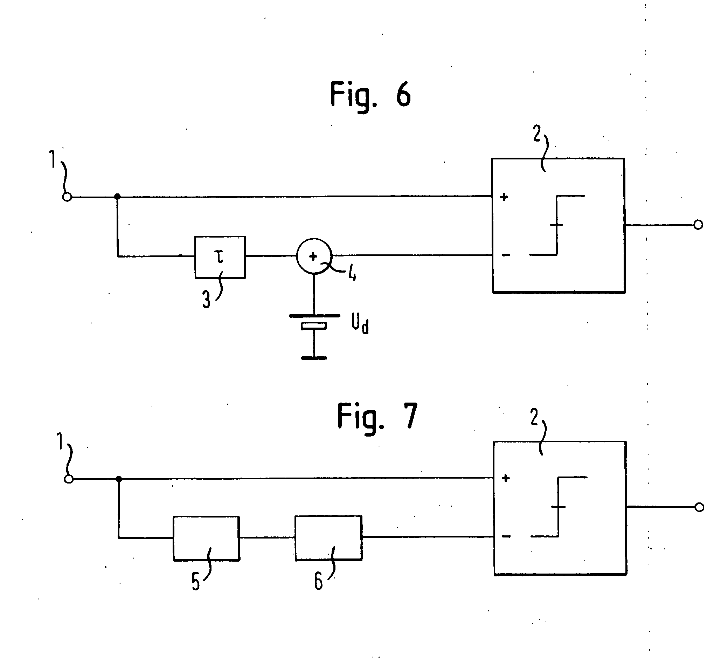

Fig. 6 zeigt ein Blockschaltbild einer Auswerteschaltung zur Durchführung eines Verfahrens gemäß den Fig. 3 und 4.

Das beispielsweise vom Ausgang einer Differenzverstärkerstufe (nicht gezeigt) gelieferte Empfangssignal X wird an einen Eingangspol 1 der Auswerteschaltung angelegt. Der Eingangspol 1 ist mit einem ersten Eingang eines Komparators 2 verbunden. Weiterhin ist der Eingangspol 1 mit dem Eingang einer Verzögerungsschaltung 3 verbunden. Der Ausgang der Verzögerungsschaltung 3 ist einer Summierstufe 4 zugeführt, welche dem Ausgangssignal der Verzögerungsschaltung 3 einen Gleichspannungsanteil U_{d} überlagert. Der Ausgang der Summierstufe 4 ist mit dem zweiten Eingang der Komparatorstufe 2 verbunden.

Der Komparator 2 liefert ein diskretes Ausgangssignal, welches den Wert "1" annimmt, wenn das am Eingangspol 1 anliegende Signal größer ist als das von der Summierstufe 4 kommende Signal. Dieses Ausgangssignal entspricht den in den Fig. 4b und 5b gezeigten diskreten Signalen und ist dementsprechend zur Weiterverarbeitung geeignet.

Fig. 7 zeigt eine gegenüber Fig. 6 alternative Ausführungsform einer Auswerteschaltung. Der Unterschied gegenüber Fig. 6 besteht darin, dass die Verzögerungsschaltung 3 und die Summierstufe 4 durch eine Reihenschaltung aus einem Allpass 5 und einem Tiefpass 6 ersetzt ist, wobei der Tiefpass 6 dem Allpass 5 nachgeschaltet ist.

Der Allpass 5 ist bevorzugt ein Allpass zweiter Ordnung, in welchen zudem ein Invertierer integriert ist. Ein Allpass zweiter Ordnung erbringt noch nicht die erfindungsgemäß benötigte Verzögerung und hat zudem die Eigenschaft, die Amplitude höherer Frequenzen gegenüber Amplituden niedriger Frequenzen anzuheben.

Der Tiefpass 6 besitzt wiederum einen integrierten Invertierer, dämpft die zuvor vom Allpass 5 verstärkten höheren Frequenzanteile und bewirkt zudem eine zusätzliche Verzögerung. Gleichzeitig bewirkt der Tiefpass 6 eine Erhöhung des Gleichanteils des ihm zugeführten Signals um den Betrag U_{d}.

Insofern erbringen Allpass 5 und Tiefpass 6 gemeinsam die erfindungsgemäß benötigte Verzögerung sowie die erfindungsgemäß benötigte Erhöhung des Gleichanteils, ohne dass aufwendige Bauteile, wie beispielsweise ein Allpass 6. Ordnung, benötigt würden.

Die Verarbeitung der beiden am Komparator 2 anliegenden Signale erfolgt in gleicher Weise wie bezüglich Fig. 6 bereits erläutert.

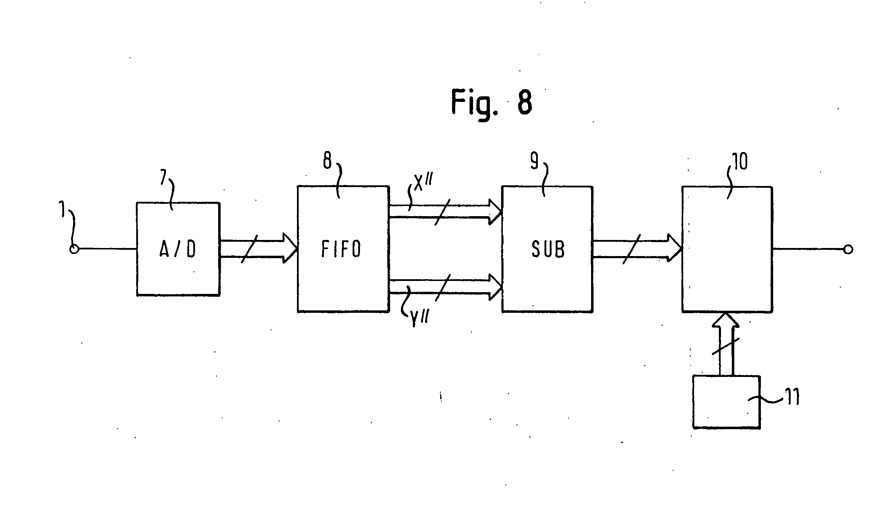

Fig. 8 zeigt ein Blockschaltbild einer weiteren Variante einer Auswerteschaltung, die zur Durchführung der ersten erfindungsgemäßen Lösungsvariante auf digitaler Basis geeignet ist.

Am Eingangspol 1 der Auswerteschaltung liegt beispielsweise wiederum das Ausgangssignal einer (nicht dargestellten) Differenzverstärkerstufe an. Dieses Signal entspricht in der Terminologie dieser Anmeldung dem "Empfangssignal" .

Das Empfangssignal wird einem A/ D-Wandler 7 zugeführt, welcher die in Abhängigkeit vom Empfangssignal generierten Digitalwerte einem Speicher 8 zur Verfügung stellt. Der Speicher 8 ist als Ring- oder FIFO-Speicher ausgebildet, so dass in ihm jeweils die aktuellsten, vom A/D-Wandler 7 gelieferten Werte gespeichert werden können.

Der Speicher 8 wird gleichzeitig an zwei unterschiedlichen Speicherpositionen ausgelesen, wobei die beiden, von diesen beiden Speicherpositionen herrührenden Werte jeweils einem Eingang einer digitalen Subtraktionsstufe 9 zugeführt werden, in welcher die beiden Werte voneinander subtrahiert werden. Der Ausgang der Subtraktionsstufe 9 beaufschlagt einen ersten Eingang eines Digitalkomparators 10, dessen zweiter Eingang mit einem festen Schwellwert belegt ist, welcher durch einen entsprechend ausgebildeten Baustein 11 zur Verfügung gestellt wird.

Der Digitalkomparator 10 liefert immer dann ein Ausgangssignal vom Wert "1", wenn der von der digitalen Subtraktionsstufe 9 kommende Wert größer ist als der vom Baustein 11 gelieferte Schwellwert. Dementsprechend ist das Ausgangssignal des Digitalkomparators 10 zur Weiterverarbeitung geeignet.

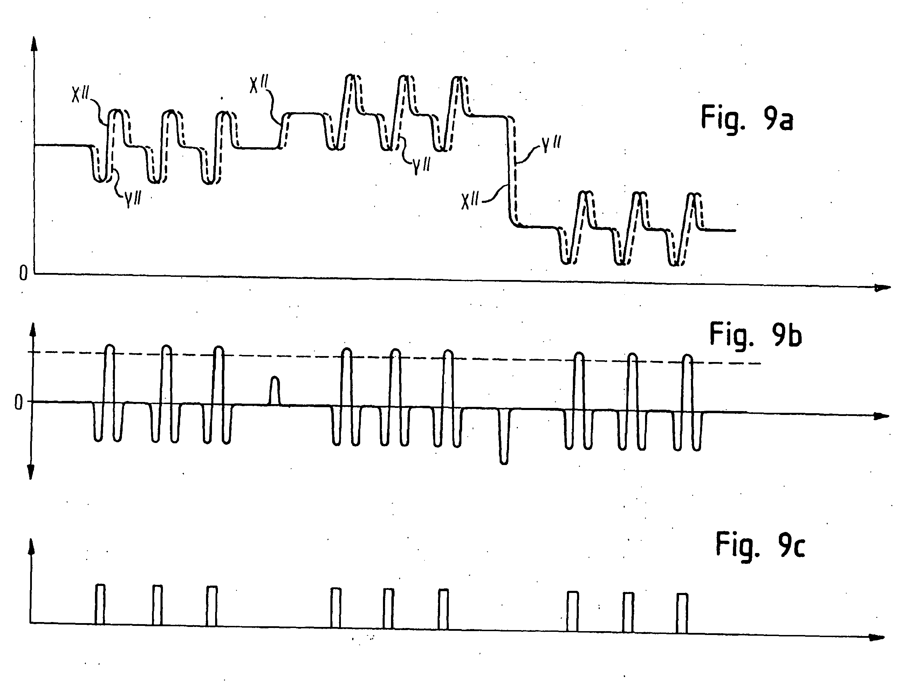

Fig. 9a bis c veranschaulichen mögliche Signalverläufe, wie sie in einer Auswerteschaltung gemäß Fig. 8 auftreten können.

Mit durchgezogener Linie ist in Fig. 9a der zeitliche Verlauf von Werten gezeigt, welche von einer ersten Speicherposition des Speichers 8 herrühren. Dieses Signal ist in Fig. 9a mit X" bezeichnet. Mit gestrichelter Linie ist dementsprechend der zeitliche Verlauf der Werte veranschaulicht, welcher von einer zweiten Speicherposition des Speichers 8 ausgelesen werden. Dieses Signal ist mit Y" bezeichnet.

Fig. 9a kann entnommen werden, dass das Signal Y" gegenüber dem X" verzögert ist, was bedeutet, dass die Werte des Signals X" von einer aktuelleren Speicherposition ausgelesen werden als die Werte des Signals Y".

Der Verlauf beider Signale X" und Y" zeigt entsprechend Fig. 1a drei mal drei Einzelimpulse, die von drei unterschiedlichen Empfangskanälen eines Lichtgitters herrühren. Im Beispiel gemäß Fig. 9a ist die Amplitude der Einzelpulse jeweils gleich hoch, die Gleichanteile schwanken jedoch je nach Empfangskanal. Das in Verbindung mit den Fig. 8 und 9 erläuterte Verfahren funktioniert jedoch ebenso, wenn von den verschiedenen Empfangskanälen Einzelpulse geliefert werden, die sich in ihrer Amplitude voneinander unterscheiden.

In der digitalen Subtraktionsstufe 9 gemäß Fig. 8 wird die Differenz zwischen den Signalen X" und Y" gebildet, und das sich hieraus ergebende Differenzsignal ist in Fig. 9b gezeigt. Für jeden Einzelpuls ergibt sich dementsprechend ein 1,5 Perioden umfassender, im wesentlichen sinusförmiger Verlauf, wobei die positive Maximalamplitude dieses Verlaufs größer ist als dessen negative Maximalamplitude.

Mittels des Digitalkomparators 10 (Fig. 8) wird nun untersucht, wann das Signal gemäß Fig. 9b einen Schwellwert Uₛ überschreitet. In denjenigen Zeitspannen, in denen die genannte Bedingung zutrifft, generiert der Digitalkomparator 10 ein Ausgangssignal vom Wert "1", in den restlichen Zeiträumen besitzt das Ausgangssignal des Digitalkomparators 10 den Wert "0".

Das Ausgangssignal des Digitalkomparators 10 ist in Fig. 9c veranschaulicht. Diesem Signal kann entnommen werden, dass pro Einzelpuls gemäß Fig. 9a exakt ein Impuls geliefert wird, was zeigt, dass das beschriebene Verfahren zur zuverlässigen Erkennung von Einzelpulsen geeignet ist, und zwar unabhängig von deren Amplitude und deren Gleichanteil.

### Bezugszeichenliste

- 1: Eingangspol
- 2: Komparator
- 3: Verzögerungsschaltung
- 4: Summierstufe
- 5: Allpass
- 6: Tiefpass
- 7: A/D-Wandler
- 8: Speicher
- 9: digitale Subtraktionsstufe
- 10: Digitalkomparator
- 11: Baustein

## Patentansprüche

1. Verfahren zur Verarbeitung eines Empfangssignals eines Lichtgitters mit einer Vielzahl von jeweils einen Lichtempfänger aufweisenden Empfangskanälen,
**dadurch gekennzeichnet,**
**dass** ein bipolares Empfangssignal erzeugt wird, welches aus einer Folge von Signalen mehrerer, jeweils einen Transimpedanzverstärker mit Bandpasseigenschaft aufweisenden Empfangskanäle gebildet ist,
**dass** das Empfangssignal mit voneinander verschiedenen Verzögerungen einer Detektionsschaltung (9, 10, 11) zugeführt wird, welche zwei verschieden verzögerte Signale (X", Y") voneinander subtrahiert und das so erhaltene Differenzsignal daraufhin untersucht, ob es einen vorgegebenen, festen Schwellwert über- oder unterschreitet, wobei ein Detektionssignal erzeugt wird, welches anzeigt, wann der vorgegebene, feste Schwellwert über- bzw. unterschritten wird.

2. Verfahren nach Anspruch 1,
**dadurch gekennzeichnet,**
**dass** das Empfangssignal einem A/D-Wandler (7) zugeführt und die vom A/D-Wandler (7) gelieferten Ausgangssignalwerte in einem Speicher (8) abgelegt werden.

3. Verfahren nach Anspruch 2,
**dadurch gekennzeichnet,**
**dass** im Speicher (8) zumindest immer diejenigen Werte abgelegt sind, die vom A/D-Wandler (7) innerhalb einer vorgegebenen Zeitspanne vor dem jeweils aktuellen Zeitpunkt geliefert wurden.

4. Verfahren nach Anspruch 3,
**dadurch gekennzeichnet,**
**dass** die Zeitspanne zumindest der Verzögerungsdifferenz zwischen den beiden der Detektionsschaltung (9, 10, 11) zugeführten Signale entspricht.

5. Verfahren nach einem der Ansprüche 3 oder 4,
**dadurch gekennzeichnet,**
**dass** die Verzögerungsdifferenz ungefähr der Hälfte der Einzelpulsbreite des Empfangssignals entspricht.

6. Verfahren nach einem der Ansprüche 2 bis 5,
**dadurch gekennzeichnet,**
**dass** die beiden der Detektionsschaltung (9, 10, 11) zugeführten, verschieden verzögerten Signale (X", Y") durch ein Auslesen des Speichers (8) erzeugt werden.

7. Verfahren nach Anspruch 6,
**dadurch gekennzeichnet,**
**dass** das Auslesen des Speichers (8) für beide Signale (X", Y") an unterschiedlichen Speicherpositionen erfolgt, die unterschiedlichen Zeitpunkten des vom A/D-Wandler (7) gelieferten Signals entsprechen.

8. Verfahren nach Anspruch 7,
**dadurch gekennzeichnet,**
**dass** die zeitliche Differenz zwischen den beiden Zeitpunkten der Verzögerungsdifferenz zwischen den beiden der Detektionsschaltung (9, 10, 11) zugeführten Signalen entspricht.

9. Verfahren nach einem der Ansprüche 6 bis 8,
**dadurch gekennzeichnet,**
**dass** die Subtraktion der beiden verschieden verzögerten digitalen Signale (X", Y") digital durchgeführt wird.

10. Verfahren nach einem der vorhergehenden Ansprüche,
**dadurch gekennzeichnet,**
**dass** das durch die Subtraktion erhaltene Differenzsignal einem Digitalkomparator (10) zugeführt wird, welcher das Differenzsignal mit dem Schwellwert vergleicht.

11. Verfahren nach Anspruch 10,
**dadurch gekennzeichnet,**
**dass** der Schwellwert ungleich Null ist.

12. Verfahren nach einem der Ansprüche 10 bis 11,
**dadurch gekennzeichnet,**
**dass** das Ausgangssignal des Digitalkomparators (10) zur Weiterverarbeitung verwendet wird.

13. Verfahren zur Verarbeitung eines Empfangssignal eines Lichtgitters mit einer Vielzahl von jeweils einen Lichtempfänger aufweisenden Empfangskanälen,
**dadurch gekennzeichnet,**
**dass** ein bipolares Empfangssignal erzeugt wird, welches aus einer Folge von Signalen mehrerer, jeweils einen Transimpedanzverstärker mit Bandpasseigenschaft aufweisenden Empfangskanäle gebildet ist,
**dass** das Empfangssignal mit voneinander verschiedenen Verzögerungen und mit voneinander verschiedenen Gleichanteilen den beiden Eingängen einer Komparatorschaltung (2) zugeführt wird, wobei die Differenz U_{d} zwischen den Gleichanteilen konstant ist, und die Komparatorschaltung (2) ein Detektionssignal abgibt, welches anzeigt, wann das eine an der Komparatorschaltung (2) anliegende Signal größer als das andere ist.

14. Verfahren nach Anspruch 13,
**dadurch gekennzeichnet,**
**dass** der Unterschied der beiden Verzögerungen ungefähr der Hälfte der Einzelpulsbreite des Empfangssignals entspricht.

15. Verfahren nach einem der Ansprüche 13 oder 14,
**dadurch gekennzeichnet,**
**dass** das Empfangssignal in den beiden Eingangszweigen der Komparatorschaltung (2) in im wesentlichen gleichem Maße verstärkt wird.

16. Verfahren nach einem der Ansprüche 13 bis 15,
**dadurch gekennzeichnet,**
**dass** das Ausgangssignal der Komparatorschaltung (2) zur Weiterverarbeitung verwendet wird.

17. Verfahren nach einem der vorhergehenden Ansprüche,
**dadurch gekennzeichnet,**
**dass** die Einzelpulse des Empfangssignals im wesentlichen eine Sinusform aufweisen.

18. Verfahren nach einem der vorhergehenden Ansprüche,
**dadurch gekennzeichnet,**
**dass** jedem Empfangskanal eine Differenzverstärkerstufe zugeordnet ist.

19. Auswerteschaltung zur Verarbeitung eines Empfangssignals eines Lichtgitters mit einer Vielzahl von jeweils einen Lichtempfänger aufweisenden Empfangskanälen,
**dadurch gekennzeichnet,**
**dass** das aus einer Folge von Signalen mehrerer, jeweils einen Transimpedanzverstärker mit Bandpasseigenschaft aufweisenden Empfangskanäle gebildete bipolare Empfangssignal über einen ersten und einen zweiten Signalzweig an jeweils einen Eingang eines Komparators (2) angelegt ist,
wobei zumindest ein Signalzweig eine Verzögerungsschaltung (3; 5, 6) aufweist, welche bewirkt, dass das Empfangssignal mit voneinander verschiedenen Verzögerungen an den beiden Eingängen des Komparators (2) anliegt, und
wobei zumindest ein Signalzweig eine Offsetschaltung (4; 6) aufweist, welche bewirkt, dass das Empfangssignal mit voneinander verschiedenen Gleichanteilen an den beiden Eingängen des Komparators (2) anliegt, dessen Ausgangssignal eine Weiterverarbeitungsschaltung beaufschlagt,
und wobei die Differenz U_{d} zwischen den Gleichanteilen konstant ist.

20. Vorrichtung nach Anspruch 19,
**dadurch gekennzeichnet,**
**dass** die Verzögerungsschaltung (3; 5, 6) und die Offsetschaltung im gleichen Signalzweig vorgesehen sind.

21. Vorrichtung nach Anspruch 20,
**dadurch gekennzeichnet,**
**dass** die Verzögerungsschaltung und die Offsetschaltung durch einen mit einem Tiefpass (6) in Serie geschalteten Allpass (5) realisiert sind.

22. Vorrichtung nach Anspruch 21,
**dadurch gekennzeichnet,**
**dass** der Allpass (5) als Allpass 2. Ordnung mit integriertem Invertierer ausgebildet ist.

23. Vorrichtung nach einem der Ansprüche 21 oder 22,
**dadurch gekennzeichnet,**
**dass** der Tiefpass (6) einen integrierten Invertierer aufweist.

24. Vorrichtung nach einem der Ansprüche 21 bis 23,
**dadurch gekennzeichnet,**
**dass** der Tiefpass (6) dem Allpass nachgeschaltet ist.

25. Auswerteschaltung zur Verarbeitung eines Empfangssignals eines Lichtgitters mit einer Vielzahl von jeweils einen Lichtempfänger aufweisenden Empfangskanälen,
**dadurch gekennzeichnet,**
**dass** das aus einer Folge von Signalen mehrerer, jeweils einen Transimpedanzverstärker mit Bandpasseigenschaft aufweisenden Empfangskanäle gebildete bipolare Empfangssignal einen A/ D-Wandler (7) beaufschlagt, dessen Ausgangssignal an einem Speicher (8) anliegt,
**dass** von zwei unterschiedlichen Speicherpositionen ausgelesene Ausgangssignale (X", Y") des Speichers (8) an die beiden Eingänge einer digitalen Subtraktionsstufe (9) angelegt sind,
**dass** das ein Differenzsignal bildende Ausgangsignal der Subtraktionsstufe (9) einen Eingang eines Digitalkomparators (10) beaufschlagt, an dessen anderem Eingang ein fester Schwellwert anliegt, und
**dass** das Ausgangssignal des Digitalkomparators (10) eine Weiterverarbeitungsschaltung beaufschlagt.

## Claims

1. A method for the processing of a received signal of a light grid having a plurality of reception channels each comprising a light receiver,
**characterized in that**
a bipolar received signal is generated which is formed from a sequence of signals of a plurality of reception channels each having a transimpedance amplifier with a bandpass property; and
**in that** the received signal is supplied to a detection circuit (9, 10, 11) with delays which differ from one another, said detection circuit subtracting the two differently delayed signals (X", Y") from one another and thereupon examining the difference signal obtained in this manner as to whether it exceeds or falls below a pre-defined, fixed threshold value, with a detection signal being produced which indicates when the pre-defined threshold value is exceeded or fallen below.

2. A method in accordance with claim 1,
**characterized in that**
the received signal is supplied to an A/ D converter (7) and the output signal values delivered by the A/ D converter (7) are stored in a memory (8).

3. A method in accordance with claim 2,
**characterized in that**
at least those values which were delivered by the A/D converter (7) within a pre-defined time span before the respectively current point in time are always stored in the memory (8).

4. A method in accordance with claim 3,
**characterized in that**
the time span at least corresponds to the delay difference between the two signals supplied to the detection circuit (9, 10, 11).

5. A method in accordance with claim 3 or claim 4,
**characterized in that**
the delay difference corresponds approximately to half the individual pulse width of the received signal.

6. A method in accordance with any one of the claims 2 to 5,
**characterized in that**
the two differently delayed signals (X", Y") supplied to the detection circuit (9, 10, 11) are produced by a reading out of the memory (8).

7. A method in accordance with claim 6,
**characterized in that**
the reading out of the memory (8) takes place for both signals (X", Y") at different memory positions which correspond to different points in time of the signal delivered by the A/D converter (7).

8. A method in accordance with claim 7,
**characterized in that**
the time difference between the two points in time corresponds to the delay difference between the two signals supplied to the detection circuit (9, 10, 11).

9. A method in accordance with any one of the claims 6 to 8,
**characterized in that**
the subtraction of the two differently delayed digital signals (X", Y") is carried out digitally.

10. A method in accordance with any one of the preceding claims,
**characterized in that**
the difference signal obtained by the subtraction is supplied to a digital comparator (10) which compares the difference signal with the threshold value.

11. A method in accordance with claim 10,
**characterized in that**
the threshold value is non zero.

12. A method in accordance with one of the claims 10 to 11,
**characterized in that**
the output signal of the digital comparator (10) is used for the further processing.

13. A method for the processing of a received signal of a light grid having a plurality of reception channels each comprising a light receiver,
**characterized in that**
a bipolar received signal is generated which is formed from a sequence of signals of a plurality of reception channels each having a transimpedance amplifier with a bandpass property; and
**in that** the received signal is supplied with delays which differ from one another and with constant components which differ from one another to the two inputs of a comparator circuit (2), with the difference U_{d} between the constant components being constant and the comparator circuit (2) transmitting a detection signal which indicates when the one signal applied to the comparator circuit (2) is larger than the other.

14. A method in accordance with claim 13,
**characterized in that**
the difference in the two delays corresponds approximately to half the individual pulse width of the received signal.

15. A method in accordance with one of the claims 13 or 14,
**characterized in that**
the received signal is amplified to substantially the same degree in the two input branches of the comparator circuit (2).

16. A method in accordance with any one of the claims 13 to 15,
**characterized in that**
the output signal of the comparator circuit (2) is used for the further processing.

17. A method in accordance with any one of the previous claims,
**characterized in that** the individual pulses of the received signal are substantially sinusoidal.

18. A method in accordance with any one of the previous claims,
**characterized in that**
a differential amplifier stage is associated with each reception channel.

19. An evaluation circuit for the processing of a received signal of a light grid having a plurality of reception channels each comprising a light receiver,
**characterized in that**
the bipolar received signal formed from a sequence of signals of a plurality of reception channels each having a transimpedance amplifier with a bandpass property is applied via a first and a second signal branch to a respective input of a comparator (2), wherein at least one signal branch has a delay circuit (3; 5, 6) which causes the received signal to be applied to the two inputs of the comparator (2) with delays different from one another; and wherein at least one signal branch has an offset circuit (4; 6) which causes the received signal to be applied to the two inputs of the comparator (2) with constant components which differ from one another, the output signal of the comparator acting on a further processing circuit; and
wherein the difference U_{d} between the constant components is constant.

20. An apparatus in accordance with claim 19,
**characterized in that**
the delay circuit (3; 5, 6) and the offset circuit are provided in the same signal branch.

21. An apparatus in accordance with claim 20,
**characterized in that**
the delay circuit and the offset circuit are realized by an all pass filter (5) connected in series with a low pass filter (6).

22. An apparatus in accordance with claim 21,
**characterized in that**
the all pass filter (5) is formed as an all pass filter of the 2nd order with an integrated inverter.

23. An apparatus in accordance with one of the claims 21 or 22,
**characterized in that**
the low pass filter (6) has an integrated inverter.

24. An apparatus in accordance with any one of the claims 21 to 23,
**characterized in that**
the low pass filter (6) is connected after the all pass filter.

25. An evaluation circuit for the processing of a received signal of a light grid having a plurality of reception channels each comprising a light receiver,
**characterized in that**
the bipolar received signal formed from a sequence of signals of a plurality of reception channels each having a transimpedance amplifier with a bandpass property acts upon an A/D converter (7) whose output signal is applied to a memory (8);
**in that** output signals (X", Y") of the memory (8) read out of two different memory positions are applied to the two inputs of a digital subtraction stage (9);
**in that** the output signal of the subtraction stage (9) forming a difference signal acts upon an input of a digital comparator (10) to whose other input a fixed threshold value is applied; and
**in that** the output signal of the digital comparator (10) acts upon a further processing circuit.

## Revendications

1. Procédé pour le traitement d'un signal de réception d'un grillage lumineux présentant une pluralité de canaux de réception comprenant chacun un récepteur de lumière,
**caractérisé en ce que** l'on engendre un signal de réception bipolaire, qui est formé d'une succession de signaux de plusieurs canaux de réception comportant chacun un amplificateur de transimpédance avec des propriétés de bande passante,
**en ce que** le signal de réception est admis, avec des retards mutuellement différents, à un circuit de détection (9, 10, 11) qui soustrait l'un de l'autre de signaux (X", Y") avec des retards différents et qui recherche ensuite si le signal différentiel ainsi obtenu passe au-dessus ou au-dessous d'une valeur seuil fixe prédéterminée, et qui engendre un signal de détection qui indique quand le signal différentiel est passé au-dessus ou au-dessous de la valeur seuil fixe prédéterminée.

2. Procédé selon la revendication 1,
**caractérisé en ce que** le signal de réception est admis à un convertisseur analogique/numérique (7), et les valeurs des signaux de sortie fournis par le convertisseur analogique/numérique (7) sont déposés dans une mémoire (8).

3. Procédé selon la revendication 2,
**caractérisé en ce que** l'on mémorise dans la mémoire (8) au moins toujours celles des valeurs qui ont été fournies par le convertisseur analogique/numérique (7) à l'intérieur d'une plage temporelle prédéterminée avant l'instant respectivement actuel.

4. Procédé selon la revendication 3,
**caractérisé en ce que** la plage temporelle correspond au moins à la différence de retard entre les deux signaux admis au circuit de détection (9, 10, 11).

5. Procédé selon l'une des revendications 3 ou 4,
**caractérisé en ce que** la différence de retard correspond environ à la moitié de la largeur d'impulsions individuelles du signal de réception.

6. Procédé selon l'une des revendications 2 à 5,
**caractérisé en ce que** les deux signaux (X", Y") présentant des retards différents et admis au circuit de détection (9, 10, 11) sont engendrés par une lecture de la mémoire (8).

7. Procédé selon la revendication 6,
**caractérisé en ce que** la lecture de la mémoire (8) pour les deux signaux (X", Y") a lieu à différentes positions de la mémoire, qui correspondent à des instants différents du signal fourni par le convertisseur analogique/numérique (7).

8. Procédé selon la revendication 7,
**caractérisé en ce que** la différence temporelle entre les deux instants correspond à la différence de retard entre les deux signaux admis au circuit de détection (9, 10, 11).

9. Procédé selon l'une des revendications 6 à 8,
**caractérisé en ce que** la soustraction des deux signaux numériques (X", Y") présentant des retards différents est exécutée sous forme numérique.

10. Procédé selon l'une des revendications précédentes,
**caractérisé en ce que** le signal différentiel obtenu par la soustraction est admis à un comparateur numérique (10), qui compare le signal différentiel avec la valeur seuil.

11. Procédé selon la revendication 10,
**caractérisé en ce que** la valeur seuil est différente de zéro.

12. Procédé selon l'une des revendications 10 et 11,
**caractérisé en ce que** le signal de sortie du comparateur numérique (10) est utilisé pour la poursuite du traitement.

13. Procédé pour le traitement d'un signal de réception d'un grillage lumineux présentant une pluralité de canaux de réception comprenant chacun un récepteur de lumière,
**caractérisé en ce que** l'on engendre un signal de réception bipolaire qui est formé par une succession de signaux de plusieurs canaux de réception présentant chacun un amplificateur de transimpédance avec une propriété de bande passante,
**en ce que** le signal de réception est admis aux deux entrées d'un circuit comparateur (2) avec des retards mutuellement différents et avec des parts continues mutuellement différentes, et la différence Ud entre les parts continues est constante, et le circuit comparateur (2) délivre un signal de détection qui indique quand l'un des signaux appliqués au circuit comparateur (2) est supérieur à l'autre.

14. Procédé selon la revendication 13,
**caractérisé en ce que** la différence des deux retards correspond environ à la moitié de la largeur d'impulsions individuelles du signal de réception.

15. Procédé selon l'une des revendications 13 et 14,
**caractérisé en ce que** le signal de réception dans les deux branches d'entrée du circuit comparateur (2) est amplifié sensiblement dans la même mesure.

16. Procédé selon l'une des revendications 13 à 15,
**caractérisé en ce que** le signal de sortie du circuit comparateur (2) est utilisé pour la poursuite du traitement.

17. Procédé selon l'une des revendications précédentes,
**caractérisé en ce que** les impulsions individuelles du signal de réception présentent sensiblement une forme sinusoïdale.

18. Procédé selon l'une des revendications précédentes,
**caractérisé en ce qu'**un étage d'amplificateur différentiel est associé à chaque canal de réception.

19. Circuit d'évaluation pour le traitement d'un signal de réception d'un grillage lumineux présentant une pluralité de canaux de réception comprenant chacun un récepteur de lumière,
**caractérisé en ce que** le signal de réception bipolaire formé à partir d'une succession de signaux de plusieurs canaux de réception présentant chacun un amplificateur de transimpédance avec une propriété de bande passante est appliqué, via une première branche et une seconde branche de signaux à une entrée respective d'un comparateur (2),
dans lequel au moins une branche de signal comprend un circuit retard (3 ; 5, 6) qui a pour effet que le signal de réception est appliqué aux deux entrées du comparateur (2) avec des retards mutuellement différents, et
dans lequel au moins une branche de signal comprend un circuit offset (4 ; 6) qui a pour effet que le signal de réception avec des parts continues mutuellement différentes est appliqué aux deux entrées du comparateur (2), dont le signal de sortie attaque un circuit pour la poursuite du traitement,
et dans lequel la différence Ud entre les parts continues est constante.

20. Circuit selon la revendication 19,
**caractérisé en ce que** le circuit retard (3 ; 5, 6) et le circuit offset sont prévus dans la même branche de signal.

21. Circuit selon la revendication 20,
**caractérisé en ce que** le circuit retard et le circuit offset sont réalisés par un filtre passe-tout (5) branché en série avec un filtre passe-bas (6).

22. Circuit selon la revendication 21,
**caractérisé en ce que** le filtre passe-tout (5) est réalisé sous forme de filtre passe-tout de second ordre avec inverseur intégré.

23. Circuit selon l'une des revendications 21 ou 22,
**caractérisé en ce que** le filtre passe-bas (6) comprend un inverseur intégré.

24. Circuit selon l'une des revendications 21 à 23,
**caractérisé en ce que** le filtre passe-bas (6) est branché à la suite du filtre passe-tout.

25. Circuit d'évaluation pour le traitement d'un signal de réception d'un grillage lumineux présentant une pluralité de canaux de réception comprenant chacun un récepteur de lumière,
**caractérisé en ce que** le signal de réception bipolaire formé d'une succession de signaux provenant de plusieurs canaux de réception présentant chacun un amplificateur de transimpédance avec propriété de bande passante attaque un convertisseur analogique/numérique (7), dont le signal de sortie est appliqué à une mémoire (8),
**en ce que** des signaux de sortie (X", Y"), lus depuis deux positions différentes de la mémoire (8) sont appliqués aux deux entrées d'un étage de soustraction numérique (9),
**en ce que** le signal de sortie de l'étage de soustraction (9), formant un signal différentiel, attaque une entrée d'un comparateur numérique (10), à l'autre entrée duquel est appliquée une valeur seuil fixe, et
**en ce que** le signal de sortie du comparateur numérique (10) attaque un circuit pour la poursuite du traitement.
